# EUROPÄISCHE PATENTSCHRIFT

(11) **EP 2 480 428 B1**
(45) Veröffentlichungstag und Bekanntmachung des Hinweises auf die Patenterteilung: **11.06.2014**
(21) Anmeldenummer: 10724716.5
(22) Anmeldetag: 12.06.2010
(51) Int. Cl.: B60N 3/10

(54) **CUPHOLDERMODUL FÜR EIN KRAFTFAHRZEUG**
CUPHOLDER MODULE FOR A MOTOR VEHICLE
MODULE PORTE-GOBELET POUR VÉHICULE AUTOMOBILE

(30) Priorität: 25.09.2009 DE 102009043071
(43) Veröffentlichungstag der Anmeldung: 01.08.2012
(73) Patentinhaber: Volkswagen Aktiengesellschaft, 38440 Wolfsburg (DE)
(72) Erfinder: SACK, Dieter, 38477 Jembke (DE); BRANDIN, Marko, 38440 Wolfsburg (DE)
(86) Internationale Anmeldenummer: PCT/EP2010/003550
(87) Internationale Veröffentlichungsnummer: WO 2011/035824

(56) Entgegenhaltungen:
- DE-A1- 19 630 054
- JP-A- 11 151 965
- JP-A- 2000 008 687

## Beschreibung

Die Erfindung betrifft ein Cupholdermodul für ein Kraftfahrzeug nach dem Oberbegriff des Anspruchs 1.

Cupholder in Kraftfahrzeugen werden für eine sichere Halterung von Trinkgefäßen und Flaschen im Griffbereich eines Fahrers oder von Passagieren verwendet. Bekannte, gattungsgemäße Cupholdermodule (DE 101 12 219 A1; DE 10 2005 024 591 A1) bestehen aus einem fahrzeugfest montierbaren Basisteil und einem Cupholder-Ringteil, das gegenüber dem Basisteil in eine Gebrauchsstellung oder zum Verstauen in eine Nichtgebrauchsstellung schwenkbar ist. Das Cupholder-Ringteil kann dabei einen oder mehrere Aufnahmeringe, gegebenenfalls in einer brillenförmigen Zweieranordnung aufweisen.

Ein solcher schwenkbarer Cupholder ist in seiner Nichtgebrauchsstellung platzsparend in ein Fach oder an eine Wand geschwenkt, ragt jedoch in seiner ausgeschwenkten Gebrauchsstellung in den Fahrzeuginnenraum. Insbesondere ist ein Cupholder für Fondpassagiere auf einer Mittelkonsole vor einer zweiten Sitzreihe gegebenenfalls ein Hindernis, der in der Gebrauchsstellung den Durchstieg und die Fußfreiheit im Fond einschränken kann und zudem bei einer Überlast, insbesondere durch ein ungewolltes Dagegentreten oder Drauftreten beschädigt oder zerstört werden kann.

Die DE 196 30 054 A1 beschreibt einen Halter für Behälter mit einem Deckel, der schwenkbar an einem Basisteil gehalten ist, sowie mit einem Behälterstützabschnitt an der Innenseite des Deckels. An der Innenseite des Deckels befindet sich ein Paar von Klemmabschnitten, die im Reibschluss den Behälterstützabschnitt einklemmen und ein Aufrichten oder ein Ablegen des Behälterstützabschnitts vom bzw. auf dem Deckel zulassen.

Aufgabe der Erfindung ist es, ein gattungsgemäßes Cupholdermodul für ein Kraftfahrzeug, insbesondere für Fondpassagiere so weiterzubilden, dass bei einer einfachen, kostengünstigen und robusten Ausführung davon einerseits in der Nichtgebrauchsstellung keine Behinderung ausgeht und andererseits in der Gebrauchsstellung eine Überlastfunktion vorgesehen ist, die eine Beschädigung oder Zerstörung verhindert.

Diese Aufgabe wird dadurch gelöst, dass zwischen dem Basisteil und dem Cupholder-Ringteil ein Haltearm verwendet ist, der einerseits mit dem Basisteil und andererseits mit dem Cupholder-Ringteil jeweils über eine von einer rastbaren Normalstellung in eine Überlaststellung überdrückbare Schwenkverbindung verbunden ist. Die einzelnen Raststellungen können dabei sowohl durch eine Feder, insbesondere eine Blatt- oder Schraubenfeder als auch durch eine Kunststoffverschnappung, insbesondere mit einem Rasthaken realisiert werden.

Das Cupholder-Ringteil und der Haltearm haben dabei in der Normalstellung eine gerastete Relativstellung, wobei der Haltearm am Basisteil zwischen einer jeweils ebenfalls gerasteten Gebrauchsstellung und Nichtgebrauchsstellung schwenkbar ist. Bei einer Überlast, insbesondere durch eine unsachgemäße Belastung durch einen Passagier werden eine oder beide Rastungen an den Schwenkverbindungen freigegeben, so dass das Cupholder-Ringteil und/oder der Halterarm der Überlast nachgebend ausweichen, jedoch weiter zusammenhängen und durch eine einfache Rückführung in die gerastete Normalstellung wieder funktionsfähig sind.

In einer bevorzugten konkreten Ausführung bilden in der Normalstellung ohne Überlast der Haltearm und das Cupholder-Ringteil bei entsprechend eingerasteter Schwenkverbindung eine L-Form und nehmen bei einer Überlast unter Freigabe der Rastung eine gestreckte Überlaststellung ein, wobei durch ein einfaches relatives Zurückschwenken der beiden Teile die eingerastete L-Form wieder herstellbar ist.

Zusätzlich zur vorstehenden Überlastsicherung kann das Cupholdermodul aus bei einer Überlast, insbesondere bei einer seitlichen Überlast lösbar ausrastenden Bauteilen bestehen, die nach einer Überlast einfach wieder zusammengesetzt und eingerastet werden können. Dazu können ein ausrastbarer Lagerbock am Basisteil und/oder ausrastbare Achselemente der Schwenkverbindungen verwendet werden. Auch hier kann die Ausrastfunktion generell durch bekannte Rastelemente, insbesondere durch Blattfedern, Schraubenfedern, Kugelrasten oder Kunststoffverschnappungen realisiert werden.

In einer dazu konkreten Ausgestaltung ist die Schwenkachse zwischen dem Haltearm und dem Cupholder-Ringteil durch beabstandete an einer Seitenkante des Cupholder-Ringteils ausgeformte, fluchtende Achsabschnitte gebildet, die in entsprechende Ausnehmungen an einer Seitenkante des Haltearms vorzugsweise mit Kugelformen eingeklipst und bei einer Überlast lösbar sind. Zudem sind an wenigstens einem der Achsabschnitte und der zugeordneten Ausnehmungen in Schwenkrichtung zugeordnete Rastelemente angebracht, die im eingerasteten Zustand die L-Form zwischen dem Haltearm und dem Cupholder-Ringteil festlegen. Bei einer Überlast in Schwenkrichtung, beispielsweise durch ein drauftreten auf das Cupholder-Ringteil weicht dieses der Überlast unter Freigabe der Rastung aus. Eine seitliche gerichtete Überlast auf das Cupholder-Ringteil beispielsweise durch ein Dagegentreten führt hier ebenfalls zu keiner Zerstörung, da dadurch die Klipsverbindung an den Achsabschnitten gelöst wird und das Cupholder-Ringteil vom Haltearm zerstörungsfrei freikommt. Zur Rückführung in einer Funktionsstellung ist dann lediglich diese Clipverbindung wieder herzustellen.

In einer bevorzugten konkreten Ausbildung verläuft die Schwenkverbindung zwischen dem Haltearm und dem Basisteil achsparallel zur Schwenkverbindung zwischen dem Haltearm und dem Cupholder-Ringteil. Zudem weist die Schwenkverbindung zwischen dem Haltearm und dem Basisteil für die Gebrauchsstellung eine erste Rastposition auf, bei der der Haltearm im fahrzeugmontierten Zustand etwa vertikal nach oben ausgerichtet ist. Für die Nichtgebrauchsstellung ist eine zweite Rastposition vorgesehen, bei der der Haltearm etwa horizontal nach hinten geklappt ist. In der Normalstellung, bei der der Haltearm und das Cupholder-Ringteil etwa eine L-Form bilden, ist dann das Cupholder-Ringteil etwa vertikal nach oben gerichtet und liegt in dieser Stauposition an die Vorderseite einer zweiten Sitzreihe an. In dieser Nichtgebrauchsstellung ist somit das Cupholder-Ringteil zusammen mit dem Haltearm so weggeklappt, dass sie kein Hindernis für einen Durchstieg und die Fußfreiheit vor einer zweiten Sitzreihe bilden.

In der Gebrauchsstellung ist dagegen das Cupholder-Ringteil durch den etwa vertikal stehenden Haltearm beabstandet zum Basisteil etwa horizontal ausgerichtet. Bei einer Überlast auf die Schwenkverbindung zwischen dem Haltearm und dem Basisteil ist die Rastposition für die Gebrauchsstellung überdrückbar, wobei dann der Haltearm nach vorne insbesondere auf eine Mittelkonsole klappbar ist, wobei dann auch die Schwenkverbindung zwischen dem Haltearm und dem Cupholder-Ringteil in ihre Überlaststellung überführt wird. Dadurch liegen der Haltearm und das Cupholder-Ringteil in einer insgesamt gestreckten Stellung weitgehend flächig auf der Mittelkonsole auf und können dadurch nicht beschädigt oder zerstört werden. Durch ein Zurückschwenken in die Rastpositionen wird dann die Gebrauchsstellung wieder hergestellt.

Die Schwenkverbindung zwischen dem Haltearm und dem Basisteil kann einfach unter Verwendung einer Achse gebildet werden, wobei am Haltearmrand ein Kerbprofil mit in Schwenkrichtung versetzten, wenigstens zwei Kerben für die Gebrauchsstellung und Nichtgebrauchsstellung geformt ist, in die ein überdrückbares, am Basisteil gehaltenes Rastprofil, vorzugsweise eine Blattfeder eingreift. Dadurch wird der Haltearm für betriebsmäßig relativ kleinere Belastungen sicher in der Gebrauchsstellung und Nichtgebrauchsstellung gehalten, kann jedoch bei einer größeren Überlast und einem Missbrauch zerstörungsfrei überdrückt werden. Entsprechend kann auch die Schwenkverbindung zwischen dem Haltearm und dem Cupholder-Ringteil ausgerüstet sein.

Das Cupholdermodul kann grundsätzlich überall im Fahrzeug verbaut werden und ist insbesondere auch ein einfach nachrüstbares Zubehörteil. Dessen Basisteil wird zweckmäßig formal dem Untergrund, zum Beispiel dem Bodenbelag angepasst. In einer speziellen Ausgestaltung ist es sattelartig ausgebildet und wird auf eine Fahrzeug-Mittelkonsole vor einer zweiten Sitzreihe aufgesetzt. Dadurch kann das Cupholdermodul ohne Werkzeug einfach eingesetzt und gegebenenfalls auch wieder entfernt werden, ohne dass der Mittelkonsolenaufbau oder andere Bauteile beeinträchtigt werden.

Für eine einfache Halterung von zwei Getränkeeinheiten wird zudem vorgeschlagen, das Cupholder-Ringteil als Cupholder-Brille mit zwei nebeneinander angeordneten Halteringen auszubilden. Zudem können an der Oberseite des Basisteils zwei der Cupholder-Brille in der Gebrauchsstellung zugeordnete Aufnahmemulden als Bodenaufnahmen angebracht werden.

Für eine einfache kostengünstige Ausbildung, insbesondere auch für eine einfache Ausbildung der Rast- und Clipverbindungen werden das Basisteil, der Haltearm und das Cupholder-Ringteil vorzugsweise als Kunststoffspritzteile hergestellt.

Anhand einer Zeichnung wird die Erfindung weiter erläutert.

Es zeigen:
- Fig. 1: ein Cupholdermodul in seiner Gebrauchsstellung in einem Kraftfahrzeug in einer perspektivischen Darstellung,
- Fig. 2: die Anordnung von Fig. 1 in einer Seitenansicht,
- Fig. 3: eine Ansicht entsprechend Fig. 2 jedoch in einer Nichtgebrauchsstellung,
- Fig. 4: eine perspektivische Ansicht des Cupholdermoduls in einer Überlaststellung,
- Fig. 5: eine seitliche Detailansicht einer Schwenkverbindung zwischen einem Basisteil und einem Haltearm in der Gebrauchsstellung,
- Fig. 6: eine Ansicht entsprechend Fig. 5 in der Nichtgebrauchsstellung,
- Fig. 7: eine Ansicht entsprechend Fig. 5 in der Überlaststellung,
- Fig. 8: eine Detailansicht einer gelösten Schwenkverbindung zwischen dem Haltearm und einem Cupholder-Ringteil,
- Fig. 9: eine perspektivische Ansicht einer Ausführungsform mit einem Lagerbock, und
- Fig. 10: die Ausführungsform nach Fig. 9 in einer teilweise geschnittenen Seitenansicht.

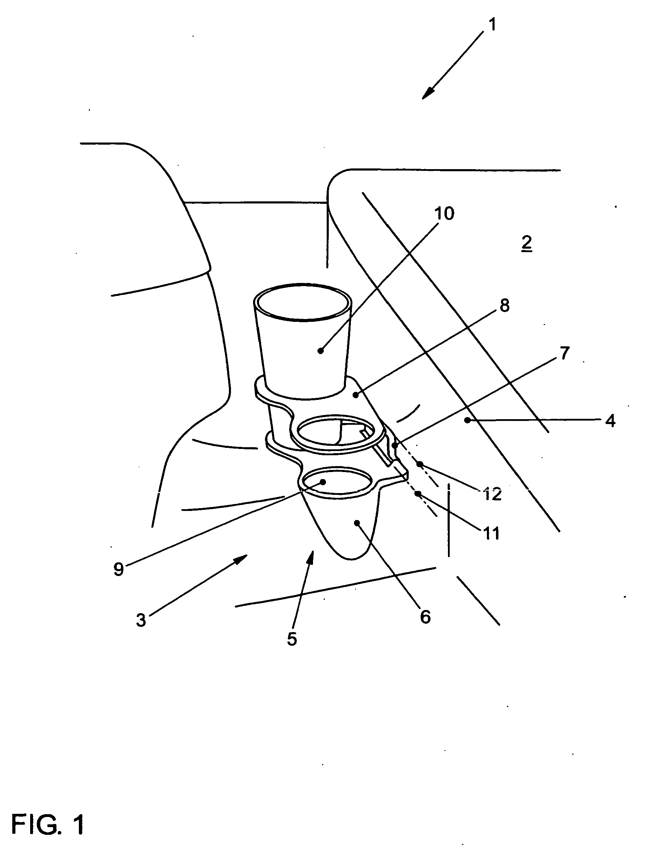

In Fig. 1 ist eine perspektivische Ansicht in einen Fahrzeuginnenraum 1 vor einer hinteren Sitzbank 2 auf eine Mittelkonsole 3 dargestellt. Vor der Vorderseite 4 und etwas beabstandet zur Sitzbank 2 ist auf der Mittelkonsole 3 ein Cupholdermodul 5 aufgesetzt, welches aus einem Basisteil 6, einem Haltearm 7 und einem Cupholder-Ringteil als Cupholder-Brille 8 mit zwei Halteringen besteht.

Das Basisteil 6 ist sattelartig ausgebildet und übergreift mit seinen Seitenteilen für eine Halterung die Mittelkonsole 3. An der Oberseite des Basisteils sind nebeneinander zwei den Halteringen der Cupholder-Brille 8 zugeordnete Aufnahmemulden 9 für den Bodenbereich eines gehaltenen Gefäßes 10 eingeformt.

Der Haltearm 7 ist mit dem Basisteil 6 jeweils an einer rückseitigen Kante mit einer ersten Schwenkverbindung 11 und entsprechend mit der Cupholder-Brille mit einer zweiten Schwenkverbindung 12 verbunden.

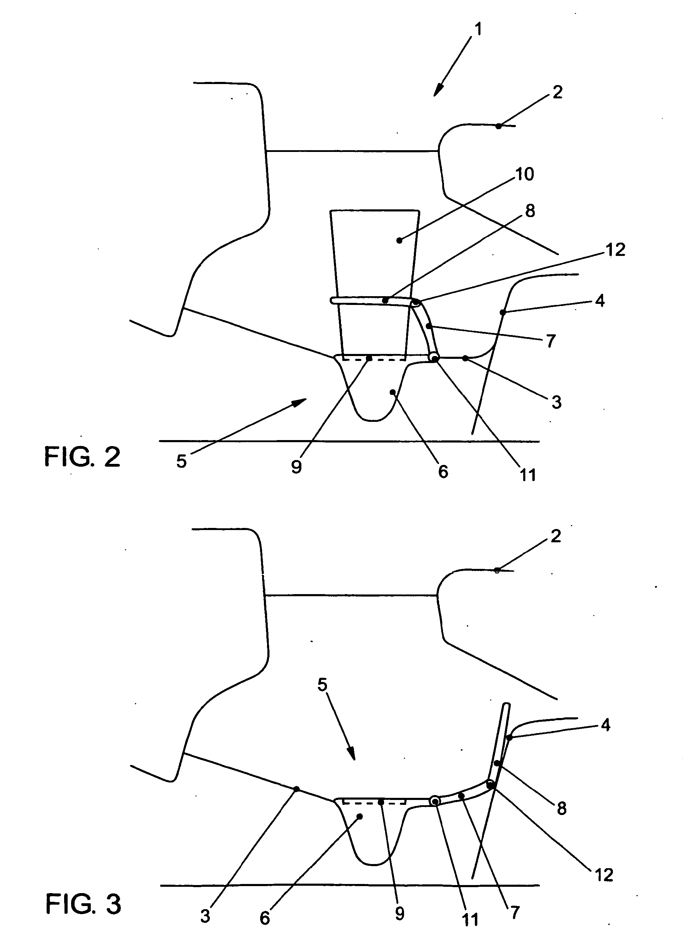

In einer gerasteten Normalstellung (ohne Überlast) bilden der Haltearm 7 und die Cupholder-Brille 8 seitlich betrachtet etwa eine L-Form wie in den Fig. 1 und der Seitenansicht der Fig. 2 dargestellt. Dabei ragt der Haltearm 7 vom Basisteil 6 nach oben ab, so dass die Cupholder-Brille 8 in der Gebrauchsstellung über dem Basisteil 6 und den Aufnahmemulden 9 gehalten ist, so dass ein Gefäß 10 eingestellt und gehalten werden kann.

Die Schwenkverbindung 11 ist in der Gebrauchsstellung (Fig. 1 und 2) rastbar und ebenso in der Nichtgebrauchsstellung nach Fig. 3, bei der der Haltearm 7 nach hinten geklappt ist. In der Nichtgebrauchsstellung liegt die Cupholder-Brille 8 an der Vorderseite 4 der Sitzbank 2 platzsparend an und gibt ohne Behinderung einen Durchstieg über die Mittelkonsole 3 frei.

Auch die zweite Schwenkverbindung 12 zwischen dem Haltearm 7 und der Cupholder-Brille 8 ist rastbar ausgeführt, wobei jedoch für die Lösung dieser Rastung eine größere Kraft als Missbrauchkraft aufgebracht werden muss im Vergleich zur erforderlichen betriebsmäßigen Schwenkkraft zwischen der Gebrauchsstellung und Nichtgebrauchsstellung bei der die L-Form zwischen dem Haltearm 7 der Cupholder-Brille 8 beibehalten werden soll.

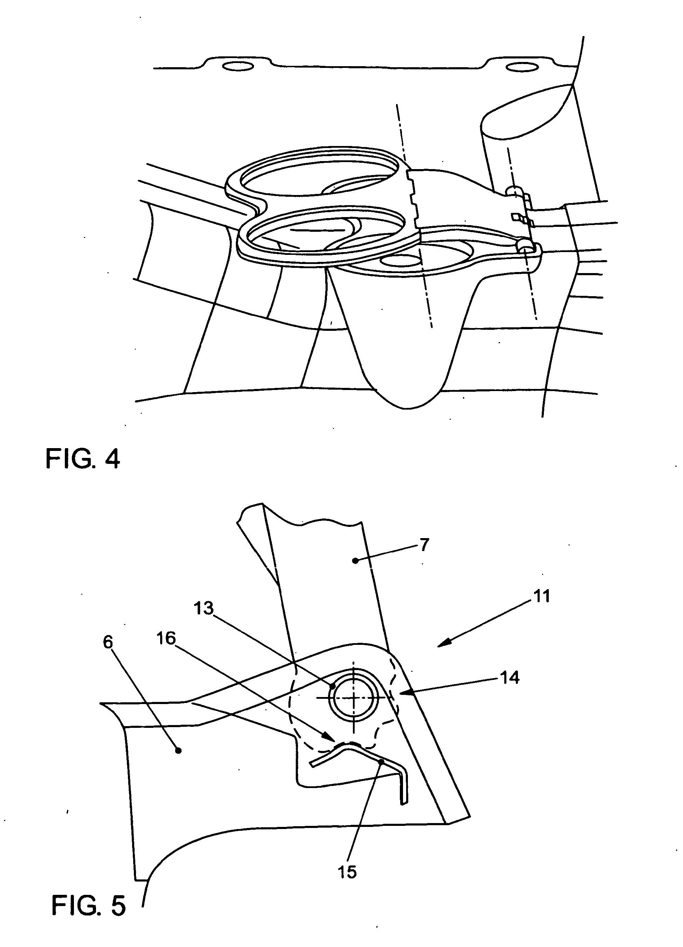

Wenn beispielsweise in der Gebrauchsstellung entsprechend der Fig. 1 und 2 (ohne Gefäß 10) auf die Cupholder-Brille 8 oder den Haltearm 7 versehentlich getreten wird, können durch eine solche Überlast die Rastungen in den Schwenkverbindungen 11, 12 gelöst werden, wodurch der Haltearm 7 und die Cupholder-Brille 8 zerstörungsfrei nach vorne schwenken und wie in Fig. 4 dargestellt auf dem Basisteil 6 und der Mittelkonsole 3 aufliegen. Zur Rückführung in die Gebrauchsstellung und zur Wiederherstellung der Rastungen können der Haltearm 7 und die Cupholder-Brille 8 wieder einfach in die Gebrauchsstellung von Hand zurückgeschwenkt werden.

Einzelheiten zur konkreten Ausbildung der ersten Schwenkverbindung 11 zwischen dem Haltearm 7 und dem Basisteil 6 sind in den Fig. 5 bis 7 dargestellt:
Die erste Schwenkverbindung 11 verläuft achsparallel zur zweiten Schwenkverbindung 12. Am freien Haltearmrand ist bei der ersten Schwenkverbindung 11 ein Kerbprofil 14 geformt, in das eine am Basisteil 6 gehaltene, vorgespannte Blattfeder 15 entsprechend der jeweiligen Stellungen eingreift. In Fig. 5 ist der Haltearm 7 in der Gebrauchsstellung dargestellt, bei der die Blattfeder 15 in eine Gebrauchsstellungkerbe 16 für eine stabile Halterung eingreift.

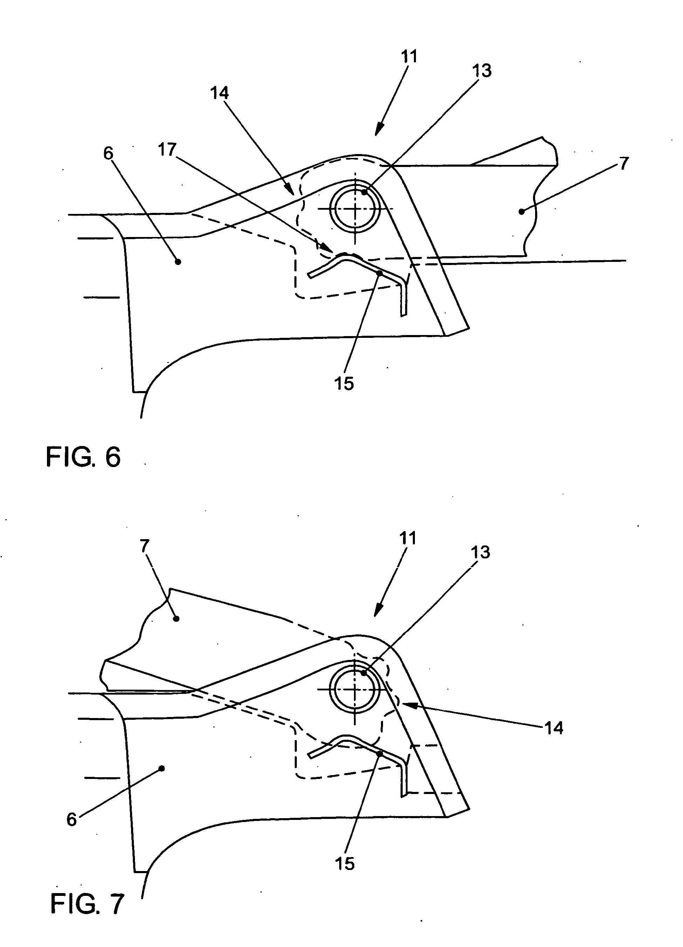

Aus dieser Position kann der Haltearm 7 in seine in Fig. 6 dargestellte Nichtgebrauchsstellung geschwenkt werden, in der die Blattfeder 15 in eine Nichtgebrauchsstellung-Kerbe 17 für eine stabile Halterung in dieser Position eingreift.

Andererseits kann der Haltearm 7 bei Überlast auch in die nach vorne geklappte Position gemäß Fig.7 und entsprechend Fig.4 ausweichen. Ersichtlich kann aus dieser Überlaststellung der Haltearm 7 wieder einfach in die eingerastete Gebrauchsstellung gemäß Fig. 5 zurückgeschwenkt werden.

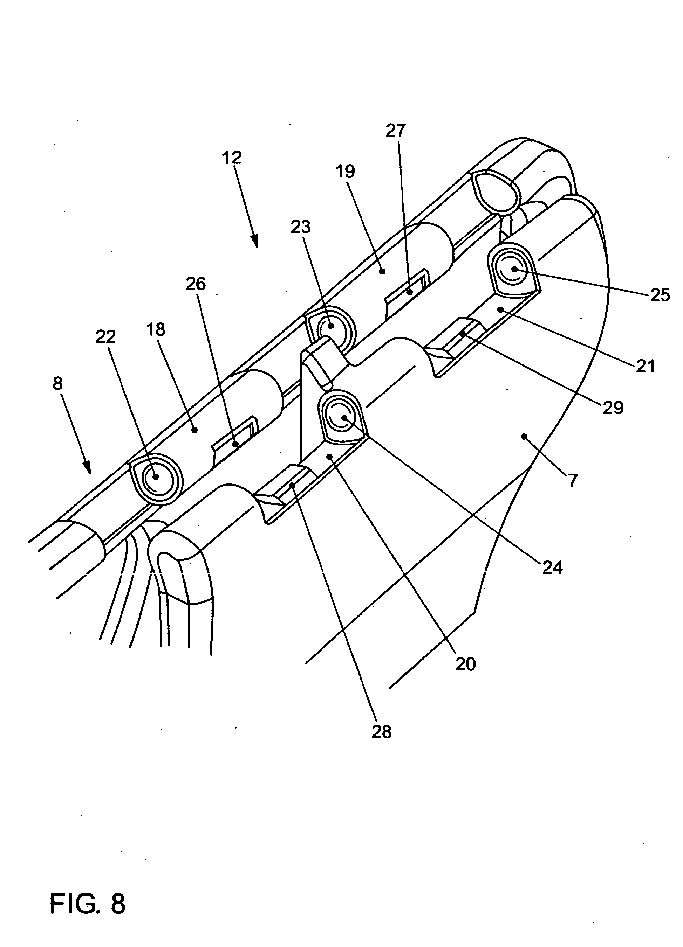

In Fig. 8 ist in einer perspektivischen Teilansicht die konkrete Ausbildung der zweiten Schwenkverbindung 12 zwischen dem Haltearm 7 und der Cupholder-Brille 8 in einer aus einer Clipverbindung gelösten Position dargestellt. Die Schwenkachse ist hier durch beabstandete, an einer Seitenkante der Cupholder-Brille 8 angeformte, fluchtende Achsabschnitte 18, 19 gebildet, die in entsprechende Ausnehmungen 20, 21 an einer Seitenkante des Haltearms 7 mit halbkugelförmig vorstehenden Kugelformen 22, 23 in zugeordnete Kugelkalotten 24, 25 eingeklipst sind. Diese Clipverbindung stellt eine weitere Überlastsicherung dar, da insbesondere bei einer seitlich wirkenden Überlast die Clipverbindung zerstörungsfrei lösbar und anschließend einfach von Hand wieder herstellbar ist.

Zudem sind an den Achsabschnitten 18, 19 in Schwenkrichtung liegende Rastaufnahmen 26, 27 für Rastnasen 28, 29 in den Ausnehmungen 20, 21 vorgesehen, die im eingerasteten Zustand die L-Form in der Normalstellung ohne Überlast entsprechend der Fig. 1 bis 3 festlegen. Bei Überlast wird diese Rastverbindung entsprechend Fig. 4 rückstellbar freigegeben.

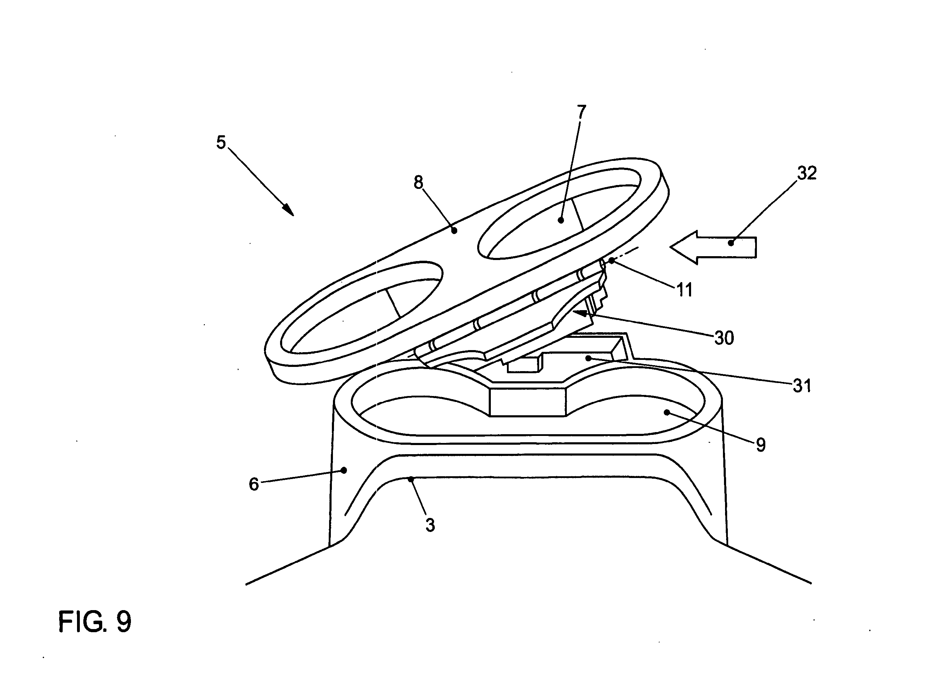

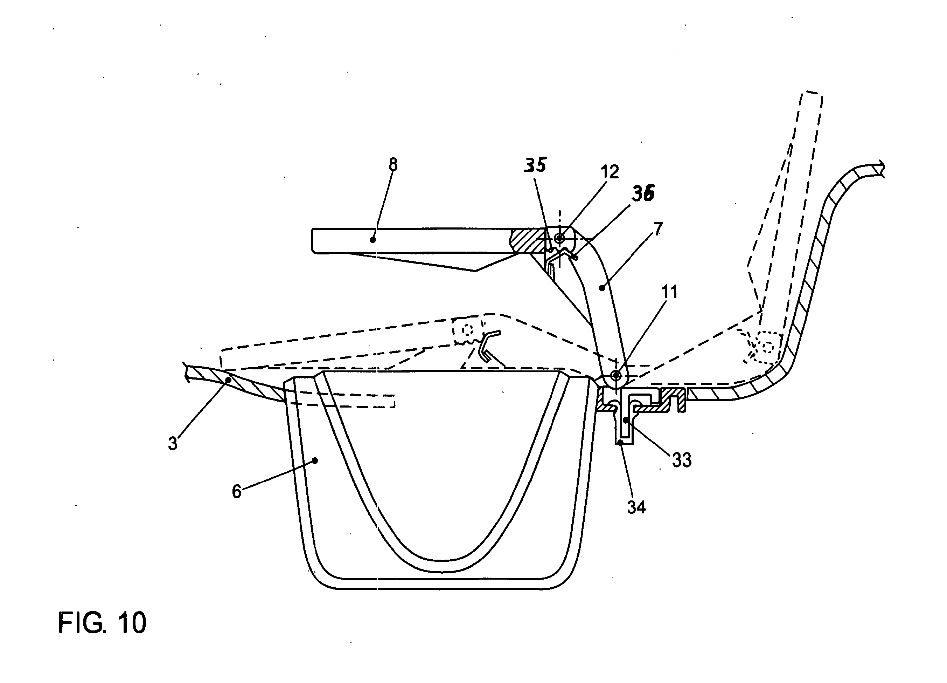

In den Fig. 9 und 10 ist eine modifizierte Ausführungsform eines Cupholdermoduls 5 mit einer zusätzlichen/alternativen Überlastsicherung gezeigt. Hier ist die Schwenkverbindung 11 an einem Lagerbock 30 angebracht, der in einer Lagerbockaufnahme 31 des Basisteils 6 eingerastet (Fig. 10) und bei Überlast (Pfeil 32) lösbar ausgerastet ist (Fig. 9). Wie aus Fig. 10 ersichtlich, weist dazu der Lagerbock 30 Steckfortsätze 33 auf, die in basisteilfeste Befestigungsclipse 34 lösbar eingesteckt sind.

Auch die Schwenkverbindung 12 zwischen dem Haltearm 7 und dem Cupholder-Ringteil 8 ist hier (entsprechend der Schwenkverbindung 11 nach den Fig. 5 bis 7) mit einem Kerbprofil 35 am Cupholder-Ringteil 8 und einem Rastelement als Blattfeder 36 zur Festlegung in den Raststellungen ausgerüstet.

**BEZUGSZEICHENLISTE**

| | | | |
|---|---|---|---|
| 1 | Fahrzeuginnenraum | | |
| 2 | Sitzbank | | |
| 3 | Mittelkonsole | | |
| 4 | Vorderseite | | |
| 5 | Cupholdermodul | | |
| 6 | Basisteil | | |
| 7 | Haltearm | | |
| 8 | Cupholder-Brille | | |
| 9 | Aufnahmemulden | | |
| 10 | Gefäß | | |
| 11 | erste Schwenkverbindung (Haltearm/Basisteil) | | |
| 12 | zweite Schwenkverbindung (Haltearm/Cupholder-Brille) | | |
| 13 | Achse | | |
| 14 | Kerbprofil | | |
| 15 | Blattfeder | | |
| 16 | Gebrauchsstellungs-Kerbe | | |
| 17 | Nichtgebrauchsstellungs-Kerbe | | |
| 18 | Achsabschnitt | | |
| 19 | Achsabschnitt | | |
| 20 | Ausnehmung | | |
| 21 | Ausnehmung | | |
| 22 | Kugelform | | |
| 23 | Kugelform | | |
| 24 | Kugelkalotte | | |
| 25 | Kugelkalotte | | |
| 26 | Rastaufnahmen | | |
| 27 | Rastaufnahmen | | |
| 28 | Rastnase | | |
| 29 | Rastnase | | |
| 30 | Lagerbock | 34 | Befestigungsclips |
| 31 | Lagerbockaufnahme | 35 | Kerbprofil |
| 32 | Pfeil | 36 | Blattfeder |
| 33 | Steckfortsatz | | |

## Patentansprüche

1. Cupholdermodul für ein Kraftfahrzeug mit einem fahrzeugfest montierbaren Basisteil (6) und einem Cupholder-Ringteil (8), das gegenüber dem Basisteil (6) in eine Gebrauchsstellung und eine Nichtgebrauchsstellung schwenkbar ist,
**dadurch gekennzeichnet,**
**dass** zwischen dem Basisteil (6) und dem Cupholder-Ringteil (8) ein Haltearm (7) verwendet ist, der einerseits mit dem Basisteil (6) und andererseits mit dem Cupholder-Ringteil (8) jeweils über eine von einer rastbaren Normalstellung in eine Überlaststellung überdrückbare Schwenkverbindung (11, 12) verbunden ist.

2. Cupholdermodul nach Anspruch 1, **dadurch gekennzeichnet, dass** in der Normalstellung ohne Überlast der Haltearm (7) und das Cupholder-Ringteil (8) bei entsprechend eingerasteter Schwenkverbindung (12) eine L-Form bilden und nach einer Überlast unter Freigabe der Rastung eine gestreckte Überlaststellung einnehmen, wobei durch ein Zurückschwenken wieder die Normalstellung als eingerastete L-Form herstellbar ist.

3. Cupholdermodul nach Anspruch 1 oder 2, **dadurch gekennzeichnet, dass** das Basisteil (6) einen bei Überlast, insbesondere bei einer seitlichen Überlast lösbar ausrastenden Lagerbock (30) aufweist, an dem die Schwenkverbindung (11) zwischen dem Haltearm (7) und dem Basisteil (6) angeordnet ist.

4. Cupholdermodul nach Anspruch 3, **dadurch gekennzeichnet, dass** der Lagerbock mit Steckfortsätzen (33) in basisteilfeste Befestigungsclipse (34) lösbar eingesteckt ist.

5. Cupholdermodul nach einem der Ansprüche 1 bis 4, **dadurch gekennzeichnet, dass** die Schwenkachsen zumindest einer der Schwenkverbindungen (11, 12) aus bei einer Überlast, insbesondere bei einer seitlichen Überlast gerasteten Achselementen bestehen.

6. Cupholdermodul nach Anspruch 5, **dadurch gekennzeichnet, dass** die Schwenkachse (12) zwischen dem Haltearm (7) und dem Cupholder-Ringteil (8) durch beabstandete an einer Seitenkante des Cupholder-Ringteils (8) geformte fluchtende Achsabschnitte (18, 19) gebildet ist, die in entsprechende Ausnehmungen (20, 21) an einer Seitenkante des Haltearm s(7) vorzugsweise mit Kugelformen (22 bis 25) eingeklipst und bei einer Überlast lösbar sind, und
dass an wenigstens einem der Achsabschnitte (18, 19) und der zugeordneten Ausnehmung (20, 21) in Schwenkrichtung zugeordnete Rastelemente (26 bis 29) angeordnet sind, die im eingerasteten Zustand die L-Form zwischen dem Haltearm (7) und dem Cupholder-Ringteil (8) festlegen und bei einer Überlast lösbar sind.

7. Cupholdermodul nach einem der Ansprüche 1 bis 6, **dadurch gekennzeichnet, dass** die Schwenkverbindung (11) zwischen dem Haltearm (7) und dem Basisteil (6) achsparallel zur Schwenkverbindung (12) zwischen dem Haltearm (7) und dem Cupholder-Ringteil (8) liegt, insbesondere
dass die Schwenkverbindung (11) zwischen dem Haltearm (7) an dem Basisteil (6) für die Gebrauchsstellung eine erste Rastposition aufweist, bei der der Haltearm (7) im fahrzeugmontierten Zustand etwa vertikal nach oben ausgerichtet ist und für die Nichtgebrauchsstellung eine zweite Rastposition aufweist, bei der der Haltearm (7) etwa horizontal nach hinten geklappt ist und das Cupholder-Ringteil (8) etwa vertikal nach oben weist, wobei es unmittelbar an der Vorderseite (4) der Sitzreihe (2) in einer Stauposition liegt, und
dass bei einer Überlast der Haltearm (7) aus der Rastposition für die Gebrauchsstellung in eine horizontale Überlaststellung nach vorne klappbar ist, wobei durch ein Zurückschwenken wieder die eingerastete Gebrauchsstellung herstellbar ist.

8. Cupholdermodul nach Anspruch 4, **dadurch gekennzeichnet, dass** die Schwenkverbindung (11) zwischen dem Haltearm (7) und dem Basisteil (6) durch ein Achslagerung (13) gebildet ist, wobei zudem am Haltearmrand ein Kerbprofil (14) mit in Schwenkrichtung versetzten wenigstens zwei Kerben (16, 17) für die Gebrauchsstellung und Nichtgebrauchsstellung geformt ist, in die ein überdrückbares am Basisteil (6) gehaltenes Rastelement, vorzugsweise eine Blattfeder (15) eingreift und/oder dass die Schwenkverbindung (12) zwischen dem Haltearm (7) und dem Cupholder-Ringteil (8) entsprechend mit einem Rastelement ausgerüstet ist.

9. Cupholdermodul nach einem der Ansprüche 1 bis 8, **dadurch gekennzeichnet, dass** das Basisteil (6) sattelartig ausgebildet ist und auf eine Fahrzeug-Mittelkonsole (3) vor einer zweiten Sitzreihe (2) aufgesetzt ist und die Mittelkonsole (3) mit Seitenteilen übergreift.

10. Cupholdermodul nach einem der Ansprüche 1 bis 9, **dadurch gekennzeichnet, dass** das Cupholder-Ringteil als Cupholder-Brille (8) mit zwei nebeneinander angeordneten Halteringen ausgebildet ist, und
dass an der Oberseite des Basisteils (6) zwei der Cupholder-Brille (8) in der Gebrauchsstellung zugeordnete Aufnahmemulden (9) als Bodenaufnahmen angebracht sind.

## Claims

1. Cupholder module for a motor vehicle with a base part (6) which can be mounted in a manner fixed to the vehicle and with a cupholder ring part (8) which is pivotable in relation to the base part (6) into a use position and a non-use position, **characterized in that** a retaining arm (7) is used between the base part (6) and the cupholder ring part (8), said retaining arm being connected on one side to the base part (6) and on the other side to the cupholder ring part (8) via a respective pivoting connection (11, 12) which is movable from a latchable normal position into an overload position.

2. Cupholder module according to Claim 1, **characterized in that**, in the normal position without an overload, the retaining arm (7) and the cupholder ring part (8) form an L shape when the pivoting connection (12) is correspondingly latched, and; after an overload, take up an extended overload position by releasing the latching, wherein the normal position in the form of a latched L shape can be restored by pivoting them back.

3. Cupholder module according to Claim 1 or 2, **characterized in that** the base part (6) has a bearing bracket (30) which is detachably unlatched in the event of an overload, in particular in the event of a lateral overload, and on which the pivoting connection (11) between the retaining arm (7) and the base part (6) is arranged.

4. Cupholder module according to Claim 3, **characterized in that** the bearing bracket is releasably plugged with plug-in extensions (33) into fastening clips (34) fixed on the based part.

5. Cupholder module according to one of Claims 1 to 4, **characterized in that** the pivot axes of at least one of the pivoting connections (11, 12) consist of spindle elements which are latched in the event of an overload, in particular in the event of a lateral overload.

6. Cupholder module according to Claim 5, **characterized in that** the pivot axis (12) between the retaining arm (7) and the cupholder ring part (8) is formed by spaced, aligned spindle sections (18, 19) which are formed on a side edge of the cupholder ring part (8), are clipped into corresponding recesses (20, 21) on a side edge of the retaining arm (7), preferably of spherical shape (22 to 25) and are releasable in the event of an overload, and **in that** latching elements (26 to 29) assigned in the pivoting direction are arranged on at least one of the spindle sections (18, 19) and the associated recess (20, 21), which latching elements, in the latched state, define the L shape between the retaining arm (7) and the cupholder ring part (8) and are releasable in the event of an overload.

7. Cupholder module according to one of Claims 1 to 6, **characterized in that** the pivoting connection (11) between the retaining arm (7) and the base part (6) lies axially parallel to the pivoting connection (12) between the retaining arm (7) and the cupholder ring part (8), in particular **in that** the pivoting connection (11) between the retaining arm (7) at the base part (6) has, for the use position, a first latching position, in which the retaining arm (7) in the state mounted on the vehicle is oriented approximately vertically upward, and, for the non-use position, has a second latching position, in which the retaining arm (7) is folded approximately horizontally rearwards and the cupholder ring part (8) points approximately vertically upwards, wherein the latter is located directly on the front side (4) of the seat row (2) in a stowed position, and **in that**, in the event of an overload, the retaining arm (7) is folded forwards from the latching position for the use position into a horizontal overload position, wherein the latched use position is restored by the retaining arm pivoting back.

8. Cupholder module according to Claim 4, **characterized in that** the pivoting connection (11) between the retaining arm (7) and the base part (6) is formed by a spindle mounting (13), wherein a notched profile (14) having at least two notches (16, 17), which are offset in the pivoting direction and are intended for the use position and non-use position is also formed on the retaining arm edge, and a movable latching element held on the base part (6), preferably a leaf spring (15), engages in said notches, and/or **in that** the pivoting connection (12) between the retaining arm (7) and the cupholder ring part (8) is correspondingly equipped with a latching element.

9. Cupholder module according to one of Claims 1 to 8, **characterized in that** the base part (6) is designed in the manner of a saddle and is placed onto a centre console (3) of the vehicle in front of a second seat row (2) and engages over the centre console (3) by means of side parts.

10. Cupholder module according to one of Claims 1 to 9, **characterized in that** the cupholder ring part is designed as a spectacles-shaped cupholder (8) with two retaining rings arranged next to each other, and **in that** two receiving troughs (9) which are assigned to the spectacles-shaped cupholder (8) in the use position are attached to the upper side of the base part (6) as base receptacles.

## Revendications

1. Module porte-gobelet pour un véhicule automobile comprenant une partie de base (6) pouvant être montée de manière fixée au véhicule et une partie d'anneau porte-gobelet (8) qui peut pivoter par rapport à la partie de base (6) dans une position d'utilisation et une position de non utilisation, **caractérisé en ce que**
l'on utilise un bras de retenue (7) entre la partie de base (6) et la partie d'anneau porte-gobelet (8), lequel est connecté d'une part à la partie de base (6) et d'autre part à la partie d'anneau porte-gobelet (8) à chaque fois par le biais d'une connexion pivotante (11, 12) pouvant être comprimée d'une position normale encliquetable dans une position de surcharge.

2. Module porte-gobelet selon la revendication 1, **caractérisé en ce que** dans la position normale sans surcharge, le bras de retenue (7) et la partie d'anneau porte-gobelet (8) forment une forme en L dans le cas d'une connexion pivotante (12) encliquetée de manière correspondante et adoptent, après une surcharge, en libérant l'encliquetage, une position de surcharge étirée, la position normale pouvant être rétablie en tant que forme en L encliquetée par un pivotement vers l'arrière.

3. Module porte-gobelet selon la revendication 1 ou 2, **caractérisé en ce que** la partie de base (6) présente un coussinet (30) se désencliquetant de manière détachable dans le cas d'une surcharge, en particulier dans le cas d'une surcharge latérale, au niveau duquel la connexion pivotante (11) est disposée entre le bras de retenue (7) et la partie de base (6).

4. Module porte-gobelet selon la revendication 3, **caractérisé en ce que** le coussinet est enfiché de manière amovible avec des saillies enfichables (33) dans des pinces de fixation (34) fixées à la partie de base.

5. Module porte-gobelet selon l'une quelconque des revendications 1 à 4, **caractérisé en ce que** les axes de pivotement d'au moins l'une des connexions pivotantes (11, 12) se composent d'éléments d'axe encliquetés dans le cas d'une surcharge, notamment dans le cas d'une surcharge latérale.

6. Module porte-gobelet selon la revendication 5, **caractérisé en ce que** l'axe de pivotement (12) est formé entre le bras de retenue (7) et la partie d'anneau porte-gobelet (8) par des portions d'axe (18, 19) espacées alignées et formées au niveau d'une arête latérale de la partie d'anneau porte-gobelet (8), qui sont enclipsées dans des évidements correspondants (20, 21) au niveau d'une arête latérale du bras de retenue (7), de préférence avec des formes sphériques (22 à 25) et qui sont détachables dans le cas d'une surcharge, et
**en ce qu'**au niveau d'au moins l'une des portions d'axe (18, 19) et de l'évidement associé (20, 21) sont disposés des éléments d'encliquetage (26 à 29) associés dans la direction de pivotement, lesquels, dans l'état encliqueté, fixent la forme en L entre le bras de retenue (7) et la partie d'anneau porte-gobelet (8) et peuvent être détachés en cas de surcharge.

7. Module porte-gobelet selon l'une quelconque des revendications 1 à 6, **caractérisé en ce que** la connexion pivotante (11) entre le bras de retenue (7) et la partie de base (6) se situe avec son axe parallèle à la connexion pivotante (12) entre le bras de retenue (7) et la partie d'anneau porte-gobelet (8), en particulier **en ce que** la connexion pivotante (11) entre le bras de retenue (7) et la partie de base (6), pour la position d'utilisation, présente une première position d'encliquetage dans laquelle le bras de retenue (7), dans l'état monté sur le véhicule, est orienté approximativement verticalement vers le haut et, pour la position de non utilisation, présente une deuxième position d'encliquetage, dans laquelle le bras de retenue (7) est rabattu approximativement horizontalement vers l'arrière et la partie d'anneau porte-gobelet (8) est tournée approximativement verticalement vers le haut, en étant située dans une position de rangement directement contre le' côté avant (4) de la rangée de sièges (2), et
**en ce que** dans le cas d'une surcharge, le bras de retenue (7) peut être rabattu vers l'avant depuis la position d'encliquetage pour la position d'utilisation dans une position de surcharge horizontale, la position d'utilisation encliquetée pouvant être rétablie par un pivotement vers l'arrière.

8. Module porte-gobelet selon la revendication 4, **caractérisé en ce que** la connexion pivotante (11) entre le bras de retenue (7) et la partie de base (6) est formée par un support sur palier d'axe (13), un profil d'encoche (14) étant formé en outre au niveau du bord du bras de retenue, avec au moins deux encoches (16, 17) décalées dans la direction de pivotement pour la position d'utilisation et la position de non utilisation, dans lesquelles encoches vient en prise un élément d'encliquetage retenu de manière à pouvoir être comprimé sur la partie de base (6), de préférence un ressort à lame (15), et/ou **en ce que** la connexion pivotante (12) entre le bras de retenue (7) et la partie d'anneau porte-gobelet (8) est munie de manière correspondante d'un élément d'encliquetage.

9. Module porte-gobelet selon l'une quelconque des revendications 1 à 8, **caractérisé en ce que** la partie de base (6) est réalisée en forme de selle et est posée sur une console centrale du véhicule (3) devant une deuxième rangée de sièges (2) et vient en prise par le dessus de la console centrale (3) avec des parties latérales.

10. Module porte-gobelet selon l'une quelconque des revendications 1 à 9, **caractérisé en ce que** la, partie d'anneau porte-gobelet est réalisée sous forme de lunettes porte-gobelet (8) avec deux anneaux de retenue disposés l'un à côté de l'autre, et
**en ce que** deux creux de réception (9) associés aux lunettes porte-gobelet (8) dans la position d'utilisation sont montés en tant que logements de fond sur le côté supérieur de la partie de base (6).
